(19) Europäisches Patentamt
European Patent Office
Office européen des brevets

(11) Veröffentlichungsnummer: **0 589 319 A1**

# (12) EUROPÄISCHE PATENTANMELDUNG

(21) Anmeldenummer: **93114667.4**

(22) Anmeldetag: **13.09.93**

(51) Int. Cl.[5]: **C07F 9/24**, A01N 57/06, A01N 57/08, C07F 9/40, C07F 9/165, C07F 9/44, C07F 9/6539, C07F 9/653, C07F 9/58, C07F 9/6512

(30) Priorität: **25.09.92 DE 4232174**

(43) Veröffentlichungstag der Anmeldung: **30.03.94 Patentblatt 94/13**

(84) Benannte Vertragsstaaten: **BE CH DE ES FR GB IT LI NL**

(71) Anmelder: **BAYER AG**
**D-51368 Leverkusen(DE)**

(72) Erfinder: **Riebel, Hans-Jochem, Dr.**
**In der Beek 92**
**D-42113 Wuppertal(DE)**
Erfinder: **Wada, Katsuaki**
**9511-4, Aza Nishi Hanjotsuka**
**Yuki-Yuki-shi, Ibaraki 307(JP)**
Erfinder: **Harwig, Jürgen, Dr.**
**Am Kloster 39**
**D-42799 Leichlingen(DE)**
Erfinder: **Erdelen, Christoph, Dr.**
**Unterbüscherhof 22**
**D-42799 Leichlingen(DE)**
Erfinder: **Turberg, Andreas, Dr.**
**Nahaweg 19**
**D-40699 Erkrath(DE)**

## (54) Phosphorylthiomethylsulfoxide und ihre Verwendung als Schädlingsbekämpfungsmittel.

(57) Die Erfindung betrifft die neuen Phosphorylthiomethylsulfoxide der allgemeinen Formel (I)

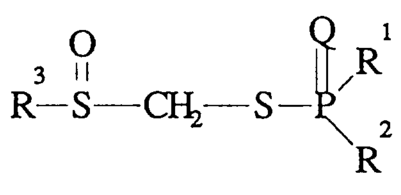

(I)

in welcher
Q für Sauerstoff oder Schwefel steht,
$R^1$ für Alkyl, Alkylthio, Alkylamino oder Dialkylamino steht,
$R^2$ für Alkoxy, Alkylthio, Alkylamino oder Dialkylamino steht und
$R^3$ für gegebenenfalls substituiertes Aryl oder gegebenenfalls substituiertes Heteroaryl steht,
welche als Schädlingsbekämpfungsmittel verwendet werden können.

EP 0 589 319 A1

Die Erfindung betrifft neue Phosphorylthiomethylsulfoxide, ein Verfahren zu ihrer Herstellung und ihre Verwendung als Schädlingsbekämpfungsmittel, insbesondere als Insektizide und als Nematizide.

Es ist bekannt, daß bestimmte Dialkoxythiophosphorylthiomethylsulfide (vgl. DE-P 957213 und US-P 2793224) und Dialkoxythiophosphorylthiomethylsulfoxide (vgl. BE-P 609383) insektizide und akarizide Eigenschaften aufweisen. Die Wirksamkeit dieser bekannten Verbindungen ist jedoch unter bestimmten Umständen, insbesondere bei niedrigen Wirkstoffkonzentrationen und Aufwandmengen, nicht immer ganz zufriedenstellend.

Es wurden nun die neuen Phosphorylthiomethylsulfoxide der allgemeinen Formel (I)

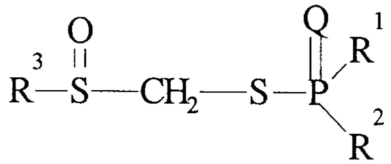

(I)

in welcher

Q für Sauerstoff oder Schwefel steht,
$R^1$ für Alkyl, Alkylthio, Alkylamino oder Dialkylamino steht,
$R^2$ für Alkoxy, Alkylthio, Alkylamino oder Dialkylamino steht und
$R^3$ für gegebenenfalls substituiertes Aryl oder gegebenenfalls substituiertes Heteroaryl steht,

gefunden.

Weiter wurde gefunden, daß man die neuen Phosphorylthiomethylsulfoxide der allgemeinen Formel (I) erhält, wenn man Phosphorylthiomethylsulfide der allgemeinen Formel (II)

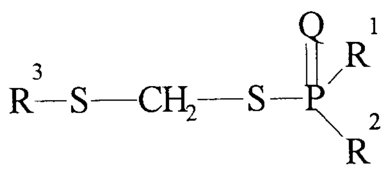

(II)

in welcher

Q, $R^1$, $R^2$ und $R^3$ die oben angegebene Bedeutung haben,

mit Oxidationsmitteln, gegebenenfalls in Gegenwart von Katalysatoren und gegebenenfalls in Gegenwart von Verdünnungsmitteln umsetzt.

Ein weiterer möglicher Syntheseweg für die Verbindungen der Formel (I) ist nachstehend skizziert, wobei Q, $R^1$, $R^2$ und $R^3$ die oben angegebene Bedeutung haben und M für Natrium, Kalium oder Ammonium steht:

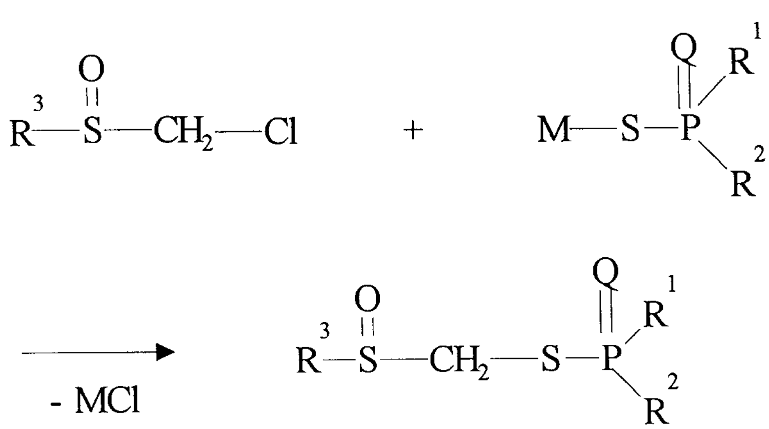


Die neuen Verbindungen der allgemeinen Formel (I) verfügen über Eigenschaften, die ihre Verwendung als Schädlingsbekämpfungsmittel ermöglichen. Sie zeigen starke Wirkung gegen Arthropoden und Nematoden

und können insbesondere zur Bekämpfung von Insekten und Nematoden im Pflanzenschutz verwendet werden.

Bevorzugte Substituenten bzw. Bereiche der in den oben und nachstehend erwähnten Formeln aufgeführten Reste werden im folgenden erläutert:

In den allgemeinen Formeln bedeutet Alkyl geradkettiges oder verzweigtes Alkyl mit vorzugsweise 1 bis 8 Kohlenstoffatomen, besonders bevorzugt mit 1 bis 6 und ganz besonders bevorzugt mit 1 bis 4 Kohlenstoffatomen. Beispielhaft seien genannt: Methyl, Ethyl, n- und i-Propyl, n-, i-, s- und t-Butyl, Pentyl, Hexyl und Octyl.

Alkoxy in der Definition von $R^2$ in den allgemeinen Formeln ist geradkettiges oder verzweigtes Alkoxy mit vorzugsweise 1 bis 6, insbesondere 1 bis 4 Kohlenstoffatomen. Beispielhaft seien Methoxy, Ethoxy, Propoxy, Butoxy sowie ihre Isomeren, wie z.B. i-Propoxy, i-, s- und t-Butoxy genannt.

Alkylthio in der Definition von $R^1$ und $R^2$ in den allgemeinen Formeln ist geradkettiges oder verzweigtes Alkylthio mit vorzugsweise 1 bis 6 und besonders bevorzugt 1 bis 4 Kohlenstoffatomen, beispielsweise Methylthio, Ethylthio, Propylthio, Butylthio, Pentylthio sowie ihre Isomeren, wie z.B. i-Propylthio, i-, s- und t-Butylthio, 1-Methylbutylthio, 2-Methylbutylthio- und 3-Methyl-butylthio.

Mono- und Dialkylamino in der Definition von $R^1$ und $R^2$ stehen für eine Aminogruppe mit 1 oder 2 Alkylgruppen, welche jeweils geradkettig oder verzweigt sein können und vorzugsweise 1 bis 5, insbesondere 1 bis 4 und besonders bevorzugt 1 bis 3 Kohlenstoffatome enthalten, wobei Methyl, Ethyl, n- und i-Propyl genannt seien. Beispielhaft seien Dimethylamino, Diethylamino, Di-n-propylamino und Di-i-propylamino genannt.

Aryl in der Definition von $R^3$ in den allgemeinen Formeln ist Aryl mit vorzugsweise 6 oder 10 Kohlenstoffatomen im Arylteil. Als bevorzugt sei unsubstituiertes oder substituiertes Phenyl oder Naphthyl, insbesondere Phenyl genannt.

Heteroaryl in der Definition von $R^3$ in den allgemeinen Formeln ist vorzugsweise ein fünf- oder sechsgliedriger heteroaromatischer, gegebenenfalls benzanellierter Ring, der ein oder mehrere Heteroatome, bevorzugt 1 bis 3 gleiche oder verschiedene Heteroatome, enthält. Als bevorzugte Heteroatome seien Sauerstoff, Schwefel und Stickstoff genannt. Als besonders bevorzugt für Heteroaryl seien genannt: Pyridyl, Pyrimidinyl, Pyridazinyl, Pyrazinyl, Furyl, Thienyl, Pyrazolyl, Thiazolyl, Thiadiazolyl, Oxadiazolyl, Oxazolyl, Chinolyl, Isochinolyl, Berzoxazolyl, Benzthiazolyl und Benzimidazolyl. Der gegebenenfalls vorliegende benzanellierte Ring kann seinerseits substituiert sein.

Aryl und Heteroaryl ($R^3$) sowie der an Heteroaryl benzannellierten Ring sind jeweils gegebenenfalls einfach oder mehrfach (vorzugsweise einfach bis dreifach, insbesondere einfach oder zweifach) substituiert, wobei die bevorzugten Substituenten ausgewählt sind aus der Reihe Cyano, Nitro, Halogen (vorzugsweise Fluor, Chlor, Brom und/oder Iod, insbesondere Fluor, Chlor und/oder Brom und ganz besonders bevorzugt Fluor und/oder Chlor), jeweils geradkettiges oder verzweigtes Alkyl, Alkoxy, Alkylthio, Alkylsulfinyl, Alkylsulfonyl oder Alkoxycarbonyl (mit jeweils vorzugsweise 1 bis 4, insbesondere 1 oder 2 Kohlenstoffatomen in den jeweiligen Alkylgruppen), jeweils geradkettiges oder verzweigtes Halogenalkyl, Halogenalkoxy, Halogenalkylthio, Halogenalkylsulfinyl und/oder Halogenalkylsulfonyl (mit jeweils vorzugsweise 1 bis 4, insbesondere 1 oder 2 Kohlenstoffatomen und jeweils 1 bis 6, insbesondere 1 bis 3 gleichen oder verschiedenen Halogenatomen, insbesondere Fluor- und/oder Chloratomen).

Als bevorzugte Substituenten seien genannt:
Cyano, Nitro, Fluor, Chlor, Brom, Iod, Methyl, Ethyl, n- oder i-Propyl, n-, i-, s- oder t-Butyl, Methoxy, Ethoxy, n- oder i-Propoxy, Methylthio, Ethylthio, n- oder i-Butylthio, Methylsulfinyl, Ethylsulfinyl, Methylsulfonyl, Ethylsulfonyl, Methoxycarbonyl, Ethoxycarbonyl, n- oder i-Propoxycarbonyl, Difluormethyl, Trifluormethyl, Chlordifluormethyl, Difluormethoxy, Trifluormethoxy, Difluormethylthio, Trifluormethylthio, Chlordifluormethylthio, Trifluormethylsulfinyl und/oder Trifluormethylsulfonyl.

In den allgemeinen Formeln steht Q bevorzugt für Sauerstoff oder Schwefel.

In den allgemeinen Formeln steht $R^1$ bevorzugt für $C_1$-$C_6$-Alkyl, $C_1$-$C_6$-Alkylthlo, $C_1$-$C_5$-Alkylamino oder Di-($C_1$-$C_5$-alkyl)-amino.

In den allgemeinen Formeln steht $R^2$ bevorzugt für $C_1$-$C_6$-Alkoxy, $C_1$-$C_6$-Alkylthio, $C_1$-$C_5$-Alkylamino oder Di-($C_1$-$C_5$-alkyl)-amino.

In den allgemeinen Formeln steht $R^3$ bevorzugt für gegebenenfalls substituiertes Phenyl oder Naphthyl oder für gegebenenfalls substituiertes und/oder gegebenenfalls benzanelliertes Heteroaryl, welches 1 bis 3 Heteroatome (vorzugsweise Sauerstoff-, Schwefel- und/oder Stickstoffatome) enthält, wobei Phenyl, Naphthyl, Heteroaryl oder der benzanellierte Ring substituiert sein können durch Cyano, Nitro, Halogen, $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl oder $C_1$-$C_4$-Alkoxycarbonyl, $C_1$-$C_4$-Halogenalkyl, $C_1$-$C_4$-Halogenalkoxy, $C_1$-$C_4$-Halogenalkylthio, $C_1$-$C_4$-Halogenalkylsulfinyl und/oder $C_1$-$C_4$-Halogenalkylsulfonyl.

In den allgemeinen Formeln steht Q besonders bevorzugt für Sauerstoff oder Schwefel.

In den allgemeinen Formeln steht $R^1$ besonders bevorzugt für $C_1$-$C_4$-Alkyl, $C_1$-$C_4$-Alkylthio, $C_1$-$C_3$-Alkylamino oder Di-($C_1$-$C_3$-alkyl)-amino.

In den allgemeinen Formeln steht $R^2$ besonders bevorzugt für $C_1$-$C_4$-Alkoxy, $C_1$-$C_4$-Alkylthio, $C_1$-$C_3$-Alkylamino oder Di-($C_1$-$C_3$-alkyl)-amino.

In den allgemeinen Formeln steht $R^3$ besonders bevorzugt für gegebenenfalls substituierte Reste aus der Reihe Phenyl, Naphthyl, Pyridyl, Pyrimidinyl, Pyridazinyl, Pyrazinyl, Furyl, Thienyl, Pyrazolyl, Thiazolyl, Thiadiazolyl, Oxadiazolyl, Oxazolyl, Chinolyl, Isochinolyl, Benzoxazolyl, Benzthiazolyl oder Benzimidazolyl, wobei als Substituenten bevorzugt Halogen (insbesondere Fluor und/oder Chlor), $C_1$-$C_4$-Alkyl (insbesondere Methyl), $C_1$-$C_4$-Alkoxy (insbesondere Methoxy), $C_1$-$C_4$-Alkylthio (insbesondere Methylthio), $C_1$-$C_4$-Alkoxycarbonyl (insbesondere Ethoxycarbonyl), Nitro und/oder Cyano stehen und als besonders bevorzugte Substituenten Cyano, Nitro, Fluor, Chlor, Brom, Methyl, Ethyl, Methoxy, Ethoxy, Methylthio, Ethylthio, Methylsulfinyl, Ethylsulfinyl, Methylsulfonyl, Ethylsulfonyl, Methoxycarbonyl, Ethoxycarbonyl, Difluormethyl, Trifluormethyl, Chlordifluormethyl, Difluormethoxy, Trifluormethoxy, Difluormethylthio, Trifluormethylthio, Chlordifluormethylthio, Trifluormethylsulfinyl und/oder Trifluormethylsulfonyl stehen können.

In den allgemeinen Formeln steht Q ganz besonders bevorzugt für Sauerstoff.

In den allgemeinen Formeln steht $R^1$ ganz besonders bevorzugt für $C_1$-$C_4$-Alkyl, $C_1$-$C_4$-Alkylthio, $C_1$-$C_3$-Alkylamino oder Di-($C_1$-$C_2$-alkyl)-amino.

In den allgemeinen Formeln steht $R^2$ ganz besonders bevorzugt für $C_1$-$C_4$-Alkoxy, wobei Ethoxy besonders hervorgehoben sei.

In den allgemeinen Formeln steht $R^3$ ganz besonders bevorzugt für gegebenenfalls durch Halogen (vorzugsweise Fluor und/oder Chlor), $C_1$-$C_4$-Alkyl (vorzugsweise Methyl), $C_1$-$C_4$-Alkoxy (vorzugsweise Methoxy), $C_1$-$C_4$-Alkylthio (vorzugsweise Methylthio), $C_1$-$C_4$-Alkoxycarbonyl (vorzugsweise Ethoxycarbonyl), Nitro und/oder Cyano substituierte Reste aus der Reihe Phenyl, Pyridyl und Pyrimidinyl, wobei gegebenenfalls durch Ethoxycarbonyl, Fluor, Chlor und/oder Cyano substituiertes Phenyl besonders hervorgehoben sei.

Die oben aufgeführten allgemeinen oder in Vorzugsbereichen aufgeführten Restedefinitionen bzw. Erläuterungen können untereinander, also auch zwischen den jeweiligen Bezugsbereichen beliebig kombiniert werden. Sie gelten für die Endprodukte sowie für die Vor- und Zwischenprodukte entsprechend.

Erfindungsgemäß bevorzugt werden die Verbindungen der allgemeinen Formel (I), in welchen eine Kombination der vorstehend als bevorzugt aufgeführten Bedeutungen vorliegt.

Erfindungsgemäß besonders bevorzugt werden die Verbindungen der allgemeinen Formel (I), in welchen eine Kombination der vorstehend als besonders bevorzugt aufgeführten Bedeutungen vorliegt.

Erfindungsgemäß ganz besonders bevorzugt werden die Verbindungen der allgemeinen Formel (I) verwendet, in welchen eine Kombination dieser vorstehend als ganz besonders bevorzugt aufgeführten Bedeutungen vorliegt.

Beispiele für die erfindungsgemäßen Verbindungen der Formel (I) sind in der nachtehenden Tabelle 1 aufgeführt.

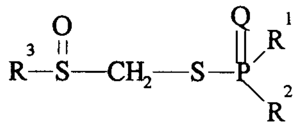 (I)

**Tabelle 1:** Beispiele für die Verbindungen der Formel (I)

| Q | $R^1$ | $R^2$ | $R^3$ |
|---|---|---|---|
| O | $CH_3$ | $OCH_3$ | 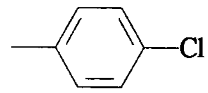 |
| S | $C_2H_5$ | $OCH_3$ | 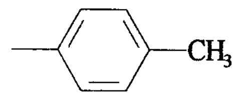 |
| O | $CH_3$ | $OC_2H_5$ | 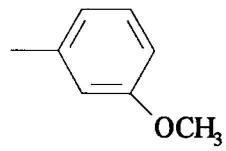 |
| S | $C_2H_5$ | $OC_2H_5$ | 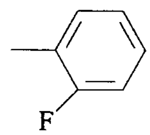 |
| O | $SC_2H_5$ | $OC_2H_5$ | 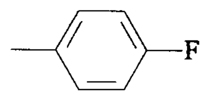 |
| S | $C_2H_5$ | $N(CH_3)_2$ | 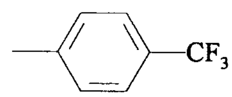 |
| O | $NHC_2H_5$ | $OC_2H_5$ | 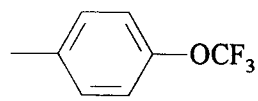 |

**Tabelle 1** - Fortsetzung

| Q | $R^1$ | $R^2$ | $R^3$ |
|---|---|---|---|
| S | $SC_2H_5$ | $SC_2H_5$ | 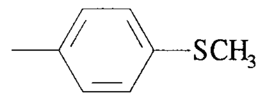 |
| O | $NHCH(CH_3)_2$ | $OCH_3$ | 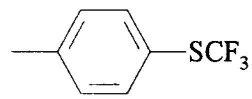 |
| S | $N(C_2H_5)_2$ | $N(C_2H_5)_2$ | 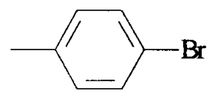 |
| O | $SC_3H_7$ | $OC_2H_5$ | 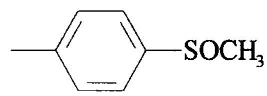 |
| S | $SC_2H_5$ | $OCH(CH_3)_2$ | 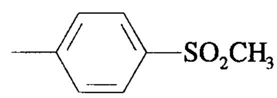 |
| O | $NHCH_3$ | $OC_2H_5$ | 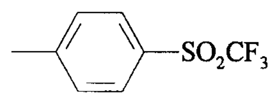 |
| S | $C_2H_5$ | $OC_2H_5$ | 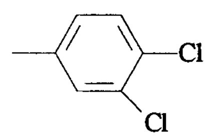 |
| O | $NHC_2H_5$ | $OC_2H_5$ | 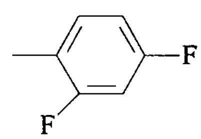 |
| S | $SC_3H_7$ | $OC_2H_5$ | 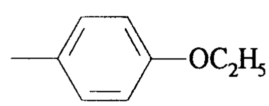 |
| O | $NHCH(CH_3)_2$ | $OC_2H_5$ | 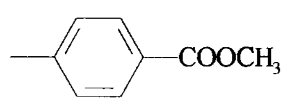 |
| S | $CH_3$ | $OC_2H_5$ | 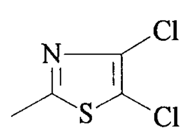 |

**Tabelle 1** - Fortsetzung

| Q | $R^1$ | $R^2$ | $R^3$ |
|---|---|---|---|
| O | $N(CH_3)_2$ | $N(CH_3)_2$ | 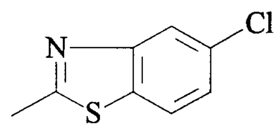 |
| S | $SC_2H_5$ | $OC_2H_5$ | 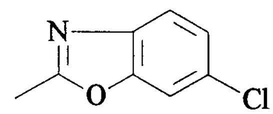 |
| O | $NHC_2H_5$ | $OC_2H_5$ | 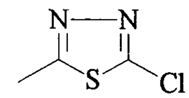 |
| S | $C_2H_5$ | $OC_3H_7$ | 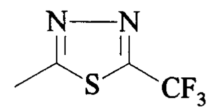 |
| O | $N(CH_3)_2$ | $OC_2H_5$ | 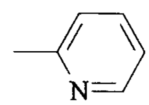 |
| S | $NHCH_3$ | $OCH(CH_3)_2$ | 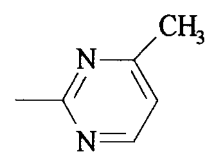 |

Verwendet man beispielsweise Dithiophosphorsäure-ethylamid-S-ethylester-S-phenylthiomethylester und Hydrogenperoxid als Ausgangsstoffe, so kann der Reaktionsablauf beim erfindungsgemäßen Verfahren durch das folgende Formelschema wiedergegeben werden:

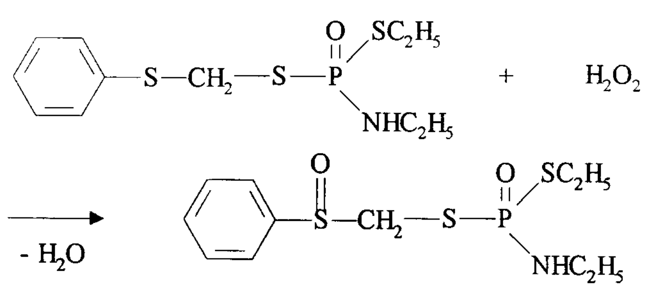


Die Ausgangsstoffe der Formel (II) sind bekannt und/oder können nach an sich bekannten Verfahren hergestellt werden (vgl. EP-A 22141, DE-OS 2418270, JP-A 48002330 - zitiert in Chem. Abstracts 80:822w, JP 59106496 - zitiert in Chem. Abstracts 102: 79150e, DE-OS 2119211, DE-OS 2034475, US-P 3639591, DE-P 957213, US-P 2793224).

Das erfindungsgemäße Verfahren wird unter Einsatz eines Oxidationsmittels durchgeführt. Es kommen hierfür die üblichen zur Oxidation von organischen Sulfiden (Thioethern) zu entsprechenden Sulfoxiden geeigneten Chemikalien in Betracht. Als Beispiele für geeignete Oxidationsmittel seien genannt: Hydrogenperoxid, Perameisensäure, Peressigsäure, Perpropionsäure, Perbenzoesäure und 3-Chlor-perbenzoesäure.

Das erfindungsgemäße Verfahren wird gegebenenfalls in Gegenwart eines Katalysators durchgeführt. Es kommen vor allem diejenigen Katalysatoren in Betracht, die im allgemeinen zusammen mit den oben

angegebenen Oxidationsmitteln bei Oxidationsreaktionen eingesetzt werden. Als Beispiele seien genannt: Natrium(meta)vanadat, Natriummolybdat, Natriumwolframat, Titan(III)-chlorid und Selendioxid.

Das erfindungsgemäße Verfahren wird vorzugsweise unter Verwendung eines Verdünnungsmittels durchgeführt. Als Verdünnungsmittel kommen dabei neben Wasser die für Oxidationsreaktionen üblichen organischen Solventien in Betracht. Hierzu gehören vorzugsweise chlorierte Kohlenwasserstoffe, wie Methylenchlorid, Ethylenchlorid, Chloroform, Tetrachlormethan, 1,1,2-Trichlorethan, Chlorbenzol und o-Dichlorbenzol, Alkohole, wie Methanol, Ethanol, Propanol, Isopropanol, Butanol, Isobutanol und sec-Butanol, Carbonsäuren, wie Ameisensäure, Essigsäure und Propionsäure.

Die Reaktionstemperaturen können bei dem erfindungsgemäßen Verfahren in einem größeren Bereich variiert werden. Zweckmäßigerweise arbeitet man bei Temperaturen zwischen -20 °C und + 120 °C, vorzugsweise bei Temperaturen zwischen 0 °C und 80 °C.

Das erfindungsgemäße Verfahren wird zweckmäßigerweise unter Normaldruck durchgeführt. Es ist jedoch auch möglich, unter erhöhtem oder vermindertem Druck - im allgemeinen zwischen 0,1 bar und 10 bar - zu arbeiten.

Zur Durchführung des erfindungsgemäßen Verfahrens setzt man auf 1 Mol Ausgangsverbindung der Formel (I) zweckmäßigerweise zwischen 1 und 5 Mol, vorzugsweise zwischen 1 und 2 Mol Oxidationsmittel, und gegebenenfalls zwischen 0,001 und 0,1 Mol, vorzugsweise zwischen 0,01 und 0,05 Mol eines Katalysators ein.

In einer bevorzugten Ausführungsform des erfindungsgemäßen Verfahrens wird die Ausgangsverbindung der Formel (I) und gegebenenfalls ein Katalysator in einem Verdünnungsmittel vorgelegt und bei Raumtemperatur wird unter Rühren das Oxidationsmittel eindosiert. Dann wird das Reaktionsgemisch, gegebenenfalls bei erhöhter Temperatur, bis zum Ende der Umsetzung gerührt. Die Aufarbeitung kann anschließend aufübliche Weise durchgeführt werden (vgl. die Herstellungsbeispiele).

Die Wirkstoffe eignen sich bei guter Pflanzenverträglichkeit und günstiger Warmblütertoxizität zur Bekämpfung von tierischen Schädlingen, vorzugsweise Arthropoden und Nematoden, insbesondere Insekten, Nematoden und Spinnentieren, besonders bevorzugt Insekten und Nematoden, die in Landwirtschaft und Gartenbau, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Vorzugsweise werden die erfindungsgemäßen Verbindungen als Pflanzenschutzmittel eingesetzt.
Zu den oben erwähnten Schädlingen gehören:
Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec..

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp..

Aus der Ordnung der Mallophaga z.B. Trichodectes spp., Damalinea spp..

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp..

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp..

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kinehniella, Galleria mellonella, Tineola bisselliella, Tinea pellionella, Hofmannophila

pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp..

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Verbindungen der Formel (I) zeichnen sich insbesondere durch hervorragende insektizide und nematizide Wirksamkeit aus. Sie zeigen beim Einsatz gegen Blatt- und Boden-Insekten starke Wirkung beispielsweise gegen Meerrettichblattkäfer-Larven (Phaedon cochleariae), Raupen der Kohlschabe (Plutella maculipennis) und Larven der grünen Reiszikade (Nephotettix cincticeps); ebenso zeigen sie starke Wirkung gegen Nematoden (z.B. Meloidogyne incognita).

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoft, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Im vorliegenden Text beziehen sich, wenn nichts anderes angegeben wird, alle Prozentangaben auf Gewichtsprozente.

Die erfindungsgemäßen Wirkstoffe eignen sich bei günstiger Warmblütertoxizität auch zur Bekämpfung von tierischen Schädlingen wie Arthropoden, vorzugsweise Insekten und Spinnentieren, die in der Tierhaltung und Tierzucht bei Haus- und Nutztieren sowie Zoo-, Labor-, Versuchs- und Hobbytieren vorkommen. Sie sind dabei gegen alle oder einzelne Entwicklungsstadien der Schädlinge sowie gegen resistente und normal sensible Arten der Schädlinge wirksam.

Durch die Bekämpfung der tierischen Schädlinge sollen Krankheiten und deren Übertragung, Todesfälle und Leistungsminderungen (z.B. bei der Produktion von Fleisch, Milch, Wolle, Häuten, Eiern) verhindert werden, so daß durch den Einsatz der Wirkstoffe eine wirtschaftlichere und einfachere Tierhaltung möglich ist bzw. in bestimmten Gebieten erst möglich wird.

Zu den Schädlingen gehören:
Aus der Ordnung der Anoplura z.B. Haematopinus spp., Linognathus spp., Solenopotes spp., Pediculus spp., Pthirus spp.;
aus der Ordnung der Mallophaga z.B. Trimenopon spp., Menopon spp., Eomenacanthus spp., Menacanthus spp., Trichodectes spp., Felicola spp., Damalinea spp., Bovicola spp.;
aus der Ordnung der Diptera z.B. Chrysops spp., Tabanus spp., Musca spp., Hydrotaea spp., Muscina spp., Haematobosca spp., Haematobia spp., Stomoxys spp., Fannia spp., Glossina spp., Lucilia spp., Calliphora spp., Auchmeromyia spp., Cordylobia spp., Cochliomyia spp., Chrysomyia spp., Sarcophaga spp., Wohlfartia spp., Gasterophilus spp., Oesteromyia spp., Oedemagena spp., Hypoderma spp., Oestrus spp., Rhinoestrus spp., Melophagus spp., Hippobosca spp.;
aus der Ordnung der Siphonaptera z.B. Ctenocephalides spp., Echidnophaga spp., Ceratophyllins spp.;
aus der Ordnung der Metastigmata z.B. Hyalomma spp., Rhipicephalus spp., Boophilus spp., Amblyomma spp., Haemophysalis spp., Dermacentor spp., Ixodes spp., Argas spp., Ornithodorus spp., Otobius spp.;
aus der Ordnung der Mesastigmata z.B. Dermanyssus spp., Ornithonyssus spp., Pneumonyssus spp.;
aus der Ordnung der Prostigmata z.B. Cheyletiella spp., Psorergates spp., Myobia spp., Demodex spp., Neotrombicula spp.;
aus der Ordnung der Astigmata z.B. Acarus spp., Myocoptes spp., Psoroptes spp., Chorioptes spp., Otodectes spp., Sarcoptes spp., Notoedres spp., Knemidocoptes spp., Neoknemidocoptes spp., Lytodites spp., Laminosioptes spp..

Zu den Haus- und Nutztieren gehören Säugetiere, wie z.B. Rinder, Schafe, Ziegen, Pferde, Schweine, Hunde, Katzen, Kamele, Wasserbüffel, Esel, Kaninchen, Damwild, Rentiere, Pelztiere wie z.B. Nerze, Chinchilla, Waschbär, Vögel wie z.B. Hühner, Puten, Fasane, Gänse, Enten.

Zu Labor- und Versuchstieren gehören z.B. Mäuse, Ratten, Meerschweinchen, Goldhamster, Hunde und Katzen.

Zu den Hobbytieren gehören z.B. Hunde und Katzen.

Die Anwendung kann sowohl einen Befall vorbeugend als auch nach einem erfolgten Befall durch die Schädlinge vorgenommen werden.

Die Anwendung der Wirkstoffe erfolgt direkt oder in Form von geeigneten Zubereitungen beispielsweise mit Hilfe wirkstoffhaltiger Formkörper wie z.B. Streifen, Platten, Bänder, Halsbänder, Ohrmarken, Gliedermaßenbänder, Markierungsvorrichtungen. Die Wirkstoffe bzw. Formulierungen können auch in die Umgebung der Tiere ausgebracht werden.

Die Anwendung auf die Haut bzw. die Federn oder das Fell geschieht z.B. in Form des Tauchens (Dippen), Sprühens (Sprayen) oder Aufgießens (pour-on und spot-on) und des Einpuderns.

Besonders hervorgehoben seien die Zubereitungen Zur Anwendung auf die Haut, die Federn oder das Fell der Tiere sowie zur Behandlung der Umgebung der Tiere. Dazu gehören Lösungen, Suspensions- und Emulsionskonzentrate sowie Mikroemulsionen, die vor Anwendung mit Wasser verdünnt werden, Aufgußformulierungen, Pulver und Stäube, Aerosole und wirkstoffhaltige Formkörper sowie dust-bags, back-rubber.

Zu den oberflächenaktiven Stoffen zählen:

Emulgatoren und Netzmittel wie anionaktive Tenside, z.B. Alkylsulfonate, Alkylsulfate, Arylsulfonate, Na-Laurylsulfat, Fettalkoholethersulfate, Mono/Dialkylpolyglykoletherorthophosphorsäureester-Monoethanolaminsalz, Calciumalkylarylsulfonat;

kationaktive Tenside, z.B. Cetyltrimethylammoniumchlorid;

ampholytische Tenside, z.B. Di-Na-N-lauryl-beta-aminodipropionat oder Lecithin;

nichtionogene Tenside, z.B. polyoxyethyliertes Ricinusöl, polyoxyethyliertes Sorbitan-Monooleat, polyoxyethyliertes Sorbitan-Monostearat, Glycerinmonostearat, Polyoxyethylenstearat, Alkylphenolpolyglykolether, polyoxyethyliertes Sorbitanmonopalmitat, Polyoxyethylenlaurylether, Polyoxyethylenoleylether, Polyoxyethylenmannitanmonolaurat, Alkylpolyglykolether, Oleylpolyglykolether, Dodecylpolyglykolether, ethoxyliertes Nonylphenol, Isooctylphenolpolyethoxyethanol.

Die Zubereitungen können außerdem enthalten:

Haftvermittler, z.B. Carboxymethylcellulose, Methylcellulose und andere Cellulose- und Stärke-Derivate, Polyacrylate, Alginate, Gelatine, Gummi arabicum, Polyvinylpyrrolidon, Polyvinylalkohol, Copolymere aus Methylvinylether und Maleinsäureanhydrid, Polyethylenglykole, Paraffine, Öle, Wachse, hydriertes Rizinusöl, Lecithine und synthetische Phospholipide.

Die Zubereitungen können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe enthalten.

Die Zubereitungen können Spreitmittel enthalten, z.B. Silikonöle verschiedener Viskosität, Fettsäureester wie Ethylstearat, Di-n-butyl-adipat, Laurinsäurehexylester, Dipropylen-glykolpelargonat, Ester einer verzweigten Fettsäure mittlerer Kettenlänge mit gesättigten Fettalkoholen $C_{16}$-$C_{18}$, Isopropylmyristat, Isopropylpalmitat, Capryl/Caprinsäureester von gesättigten Fettalkoholen der Kettenlänge $C_{12}$-$C_{18}$, Isopropylstearat, Ölsäureoleylester, Ölsäuredecylester, Ethyloleat, Milchsäureethylester, wachsartige Fettsäureester, Dibutylphthalat, Adipinsäurediisopropylester, letzterem verwandte Estergemische u.a.;

Triglyceride wie Capryl/Caprinsäuretriglycerid, Triglyceridgemische mit Pflanzenfettsäuren der Kettenlänge $C_8$-$C_{12}$ oder anderen speziell ausgewählten natürlichen Fettsäuren, Partialglyceridgemische gesättigter oder ungesättigter evtl. auch hydroxylgruppenhaltige Fettsäuren, Mono/Diglyceride der $C_8$/$C_{10}$-Fettsäuren und andere;

Fettalkohole wie Isotridecylalkohol, 2-Octyldodecanol, Cetylstearylalkohol, Oleylalkohol.

Zur Herstellung fester Zubereitungen wird der Wirkstoff mit geeigneten Trägerstoffen gegebenenfalls unter Zusatz von Hilfsstoffen vermischt und in die gewünschte Form gebracht.

Als Trägerstoffe seien genannt alle physiologisch verträglichen festen Inertstoffe. Als solche dienen anorganische und organische Stoffe. Anorganische Stoffe sind gegebenenfalls gebrochene und fraktionierte, z.B. synthetische und natürliche Gesteinsmehle wie Kaoline, Talkum, Kreide, Quarz, Diatomeenerde, Kochsalz, Carbonate wie Calciumcarbonat, Hydrogencarbonate, Aluminiumoxide, Kieselsäuren, Tonerden, gefälltes oder kolloidales Siliciumdioxid, Phosphate.

Organische Stoffe sind z.B. Zucker, Zellulose, Nahrungs- und Futtermittel wie Milchpulver, Tiermehle, Getreidemehle und -schrote und Stärken oder Sägemehl.

Hilfsstoffe sind Konservierungsstoffe, Antioxidantien, Farbstoffe, die bereits weiter oben aufgeführt worden sind.

Weitere geeignete Hilfsstoffe sind Schmier- und Gleitmittel wie z.B. Magnesiumstearat, Stearinsäure, Talkum, Bentonite, zerfallsfördernde Substanzen wie Stärke oder quervernetztes Polyvinylpyrrolidon, Bindemittel wie z.B. Stärke, Gelatine oder lineares Polyvinylpyrrolidon sowie Trockenbindemittel wie mikrokristalline Cellulose.

Die Wirkstoffe können in Form ihrer oben erwähnten festen oder flüssigen Formulierungen auch eingekapselt vorliegen.

Die Wirkstoffe können auch in Form eines Aerosols angewendet werden. Dazu wird der Wirkstoff in geeigneter Formulierung unter Druck fein verteilt.

Es kann auch vorteilhaft sein, die Wirkstoffe in Formulierungen anzuwenden, die den Wirkstoff verzögert freigeben. Als solche seien wirkstoffhaltige Formkörper wie z.B. Platten, Bänder, Streifen, Halsbänder, Ohrmarken, Schwanzmarken, Gliedmaßenbänder, Halfter, Markierungsvorrichtungen genannt.

Die Wirkstoffe können in den Formulierungen allein oder in Mischung mit anderen Wirkstoffen oder Synergisten vorliegen.

Direkt angewendete Formulierungen enthalten vorzugsweise zwischen $10^{-7}$ und 50 Gewichtsprozent, besonders bevorzugt zwischen $10^{-4}$ und 10 Gewichtsprozent Wirkstoff.

Formulierungen die erst nach weiterer Verdünnung angewendet werden enthalten 1 bis 95 Gewichtsprozent, bevorzugt 5 bis 90 Gewichtsprozent Wirkstoff.

Die vorliegende Erfindung betrifft somit auch die Verwendung der erfindungsgemäßen Verbindungen zur Bekämpfung von tierischen Schädlingen die auf oder in der Umgebung von Tieren vorkommen.

Die Herstellung sowie die biologische Wirksamkeit der erfindungsgemäßen Verbindungen soll anhand der folgenden Beispiele erläutert werden.

Herstellungsbeispiele:

Beispiel 1

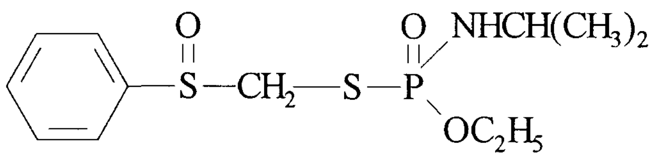

5,0 ml einer 30%igen wäßrigen Lösung von Hydrogenperoxid (44 mMol $H_2O_2$) werden tropfenweise unter Rühren zu einer Lösung von 10,7 g (35 mMol) Thiophosphorsäure-O-ethylester-isopropylamid-S-phenylthiomethylester in 70 ml Essigsäure gegeben und das Reaktionsgemisch wird 15 Stunden bei 20 °C gerührt. Dann werden die leichter flüchtigen Komponenten im Wasserstrählvakuum sorgfältig abdestilliert.

Man erhält 9,5 g (85% der Theorie) Thiophosphorsäure-O-ethylester-isopropylamid-S-phenylsulfinylmethylester als öligen Rückstand vom Brechungsindex $n_D^{20}$ = 1,5511.

Analog Beispiel 1 sowie entsprechend der allgemeinen Beschreibung des erfindungsgemäßen Herstellungsverfahrens können beispielsweise auch die in der nachstehenden Tabelle 2 aufgeführten Verbindungen der Formel (I) hergestellt werden.

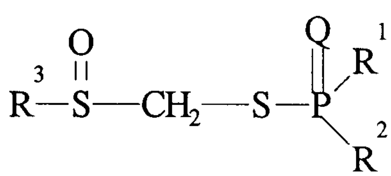 (I)

**Tabelle 2:** Herstellungsbeispiele für die Verbindungen der Formel (I)

| Bsp.-Nr. | Q | $R^1$ | $R^2$ | $R^3$ | Physikal. Daten |
|---|---|---|---|---|---|
| 2 | O | $-NHCH(CH_3)_2$ | $-OC_2H_5$ | 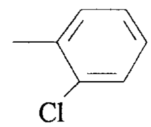 | $n_D^{20}$ = 1,5657 |
| 3 | O | $-NHCH(CH_3)_2$ | $-OC_2H_5$ | 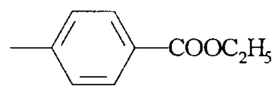 | $n_D^{20}$ = 1,5500 |
| 4 | O | $-NHCH(CH_3)_2$ | $-OC_2H_5$ | 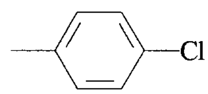 | $n_D^{20}$ = 1,5625 |
| 5 | O | $-NHCH(CH_3)_2$ | $-OC_2H_5$ | 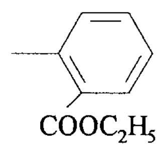 | $n_D^{20}$ = 1,5520 |
| 6 | O | 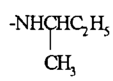 | $-OC_2H_5$ | 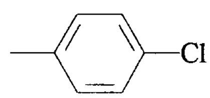 | $n_D^{20}$ = 1,5600 |
| 7 | S | $-C_2H_5$ | $-OC_2H_5$ | 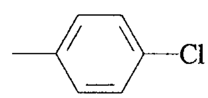 | $n_D^{20}$ = 1,6042 |
| 8 | O | $NHC_3H_7$-i | $-OC_2H_5$ | 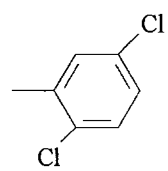 | $n_D^{20}$ = 1,5689 |
| 9 | S | $NHC_3H_7$-i | $-OC_2H_5$ | 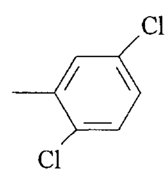 | |

**Tabelle 2** - Fortsetzung

| Bsp.-Nr. | Q | $R^1$ | $R^2$ | $R^3$ | Physikal. Daten |
|---|---|---|---|---|---|
| 10 | O | $NHC_3H_7$-i | $OCH_3$ | 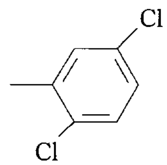 | |
| 11 | O | $N(CH_3)_2$ | $N(CH_3)_2$ | 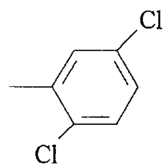 | |
| 12 | O | $NHC_2H_5$ | $-OC_2H_5$ | 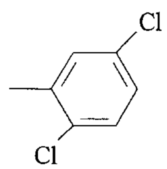 | $n_D^{20} = 1,5636$ |
| 13 | O | $NHC_3H_7$-i | $-OC_2H_5$ | 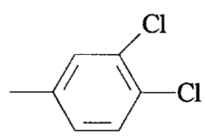 | $n_D^{20} = 1,5752$ |
| 14 | S | $NHC_3H_7$-i | $-OC_2H_5$ | 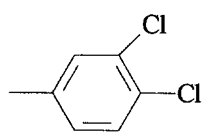 | |
| 15 | O | $NHC_3H_7$-i | $OCH_3$ | 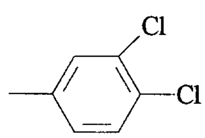 | |
| 16 | O | $N(CH_3)_2$ | $N(CH_3)_2$ | 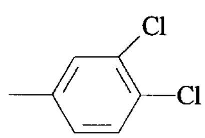 | |

**Tabelle 2** - Fortsetzung

| Bsp.-Nr. | Q | $R^1$ | $R^2$ | $R^3$ | Physikal. Daten |
|---|---|---|---|---|---|
| 17 | O | $NHC_2H_5$ | $-OC_2H_5$ | 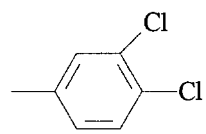 | $n_D^{20} = 1{,}5846$ |
| 18 | O | $NHC_3H_7$-i | $-OC_2H_5$ | 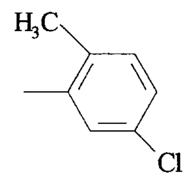 | |
| 19 | S | $NHC_3H_7$-i | $-OC_2H_5$ | 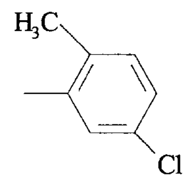 | |
| 20 | O | $NHC_3H_7$-i | $OCH_3$ | 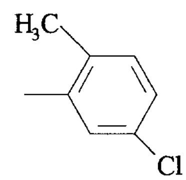 | |
| 21 | O | $N(CH_3)_2$ | $N(CH_3)_2$ | 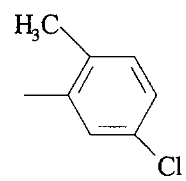 | |
| 22 | O | $NHC_2H_5$ | $-OC_2H_5$ | 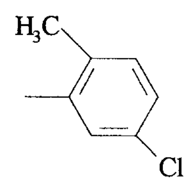 | |
| 23 | O | $NHC_3H_7$-i | $-OC_2H_5$ | 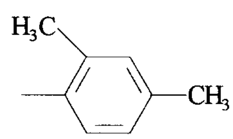 | |

**Tabelle 2** - Fortsetzung

| Bsp.-Nr. | Q | $R^1$ | $R^2$ | $R^3$ | Physikal. Daten |
|---|---|---|---|---|---|
| 24 | S | $NHC_3H_7$-i | $-OC_2H_5$ | 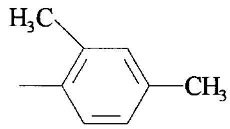 | |
| 25 | O | $NHC_3H_7$-i | $OCH_3$ | 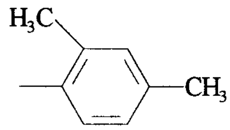 | |
| 26 | O | $N(CH_3)_2$ | $N(CH_3)_2$ | 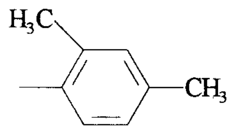 | |
| 27 | O | $NHC_2H_5$ | $-OC_2H_5$ | 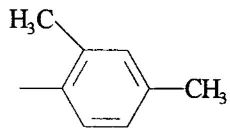 | |
| 28 | O | $NHC_3H_7$-i | $-OC_2H_5$ | 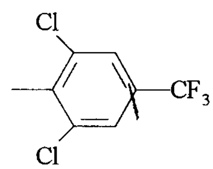 | |
| 29 | S | $NHC_3H_7$-i | $-OC_2H_5$ | 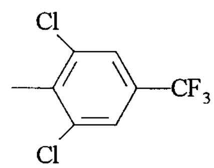 | |
| 30 | O | $NHC_3H_7$-i | $OCH_3$ | 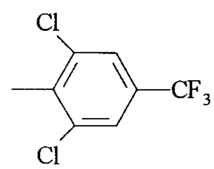 | |

**Tabelle 2** - Fortsetzung

| Bsp.-Nr. | Q | $R^1$ | $R^2$ | $R^3$ | Physikal. Daten |
|---|---|---|---|---|---|
| 31 | O | $N(CH_3)_2$ | $N(CH_3)_2$ | 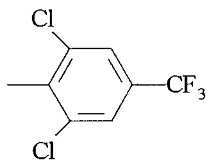 | |
| 32 | O | $NHC_2H_5$ | $-OC_2H_5$ | 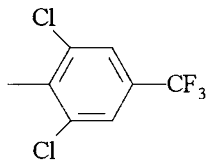 | |
| 33 | S | $NHC_3H_7$-i | $-OC_2H_5$ | 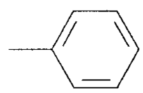 | $n_D^{20} = 1,5871$ |
| 34 | O | $NHC_3H_7$-i | $OCH_3$ | 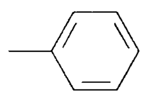 | $n_D^{20} = 1,5647$ |
| 35 | O | $NHC_2H_5$ | $-OC_2H_5$ | 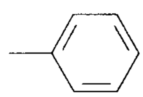 | $n_D^{20} = 1,5226$ |
| 36 | O | $N(CH_3)_2$ | $N(CH_3)_2$ | 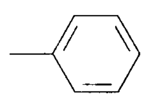 | |
| 37 | S | $NHC_3H_7$-i | $-OC_2H_5$ | 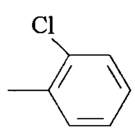 | |
| 38 | O | $NHC_3H_7$-i | $OCH_3$ | 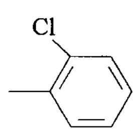 | $n_D^{20} = 1,5778$ |

**Tabelle 2** - Fortsetzung

| Bsp.-Nr. | Q | $R^1$ | $R^2$ | $R^3$ | Physikal. Daten |
|---|---|---|---|---|---|
| 39 | O | $N(CH_3)_2$ | $N(CH_3)_2$ | 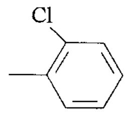 | |
| 40 | O | $NH-C_2H_5$ | $-OC_2H_5$ | 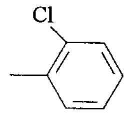 | |
| 41 | S | $NHC_3H_7$-i | $-OC_2H_5$ | 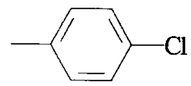 | |
| 42 | O | $NHC_3H_7$-i | $OCH_3$ | 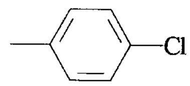 | $n_D^{20} = 1,5690$ |
| 43 | O | $N(CH_3)_2$ | $N(CH_3)_2$ | 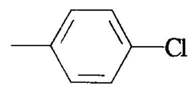 | |
| 44 | O | $NHC_2H_5$ | $-OC_2H_5$ | 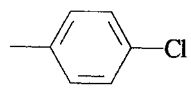 | |
| 45 | O | $S-C_3H_7$-n | $-OC_2H_5$ | 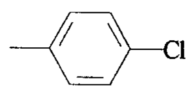 | $n_D^{20} = 1,5708$ |
| 46 | S | $NHC_3H_7$-i | $-OC_2H_5$ | 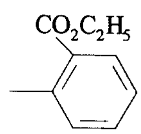 | |
| 47 | O | $NHC_3H_7$-i | $OCH_3$ | 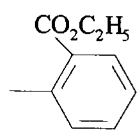 | $n_D^{20} = 1,5603$ |

**Tabelle 2** - Fortsetzung

| Bsp.-Nr. | Q | $R^1$ | $R^2$ | $R^3$ | Physikal. Daten |
|---|---|---|---|---|---|
| 48 | O | $N(CH_3)_2$ | $N(CH_3)_2$ | 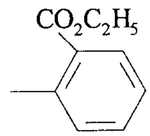 | |
| 49 | O | $NHC_2H_5$ | $-OC_2H_5$ | 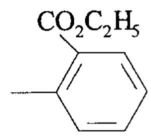 | |
| 50 | S | $NHC_3H_7$-i | $-OC_2H_5$ | 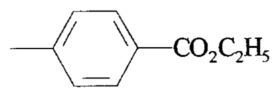 | |
| 51 | O | $NHC_3H_7$-i | $OCH_3$ | 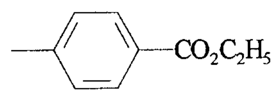 | $n_D^{20} = 1{,}5565$ |
| 52 | O | $N(CH_3)_2$ | $N(CH_3)_2$ | 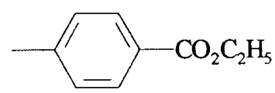 | |
| 53 | O | $NHC_2H_5$ | $-OC_2H_5$ | 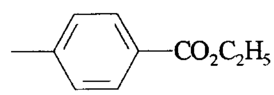 | |
| 54 | O | $NHC_3H_7$-i | $-OC_2H_5$ | 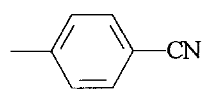 | $n_D^{20} = 1{,}5638$ |
| 55 | S | $NHC_3H_7$-i | $-OC_2H_5$ | 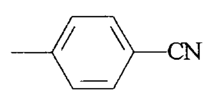 | |
| 56 | O | $NHC_3H_7$-i | $OCH_3$ | 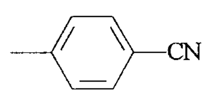 | |

**Tabelle 2** - Fortsetzung

| Bsp.-Nr. | Q | $R^1$ | $R^2$ | $R^3$ | Physikal. Daten |
|---|---|---|---|---|---|
| 57 | O | $N(CH_3)_2$ | $N(CH_3)_2$ | 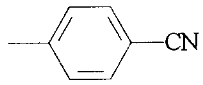 | |
| 58 | O | $NHC_2H_5$ | $-OC_2H_5$ | 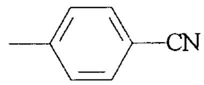 | |
| 59 | O | $NHC_3H_7$-i | $-OC_2H_5$ | 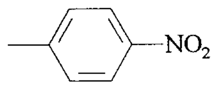 | |
| 60 | S | $NHC_3H_7$-i | $-OC_2H_5$ | 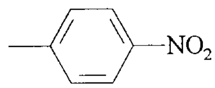 | $n_D^{20} = 1{,}5798$ |
| 61 | O | $NHC_3H_7$-i | $OCH_3$ | 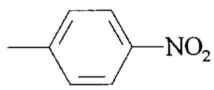 | $n_D^{20} = 1{,}5859$ |
| 62 | O | $N(CH_3)_2$ | $N(CH_3)_2$ | 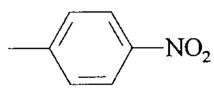 | |
| 63 | O | $NHC_2H_5$ | $-OC_2H_5$ | 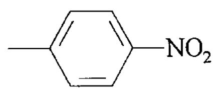 | |
| 64 | O | $NHC_3H_7$-i | $-OC_2H_5$ | 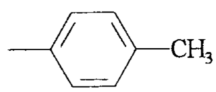 | |
| 65 | S | $NHC_3H_7$-i | $-OC_2H_5$ | 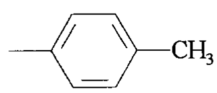 | |
| 66 | O | $NHC_3H_7$-i | $OCH_3$ | 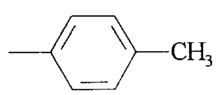 | $n_D^{20} = 1{,}5690$ |

**Tabelle 2** - Fortsetzung

| Bsp.-Nr. | Q | $R^1$ | $R^2$ | $R^3$ | Physikal. Daten |
|---|---|---|---|---|---|
| 67 | O | $N(CH_3)_2$ | $N(CH_3)_2$ | 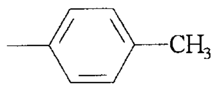 | |
| 68 | O | $NHC_2H_5$ | $-OC_2H_5$ | 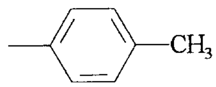 | |
| 69 | O | $NHC_3H_7$-i | $-OC_2H_5$ | 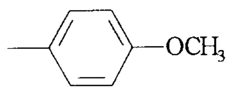 | |
| 70 | S | $NHC_3H_7$-i | $-OC_2H_5$ | 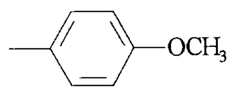 | |
| 71 | O | $NHC_3H_7$-i | $OCH_3$ | 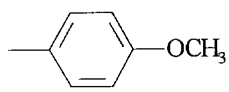 | |
| 72 | O | $N(CH_3)_2$ | $N(CH_3)_2$ | 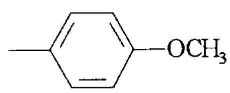 | |
| 73 | O | $NHC_2H_5$ | $-OC_2H_5$ | 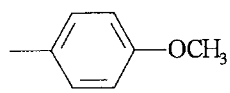 | |
| 74 | O | $NHC_3H_7$-i | $-OC_2H_5$ | 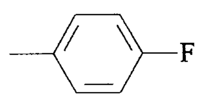 | $n_D^{20}$ = 1,5451 |
| 75 | S | $NHC_3H_7$-i | $-OC_2H_5$ | 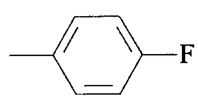 | |

**Tabelle 2** - Fortsetzung

| Bsp.-Nr. | Q | $R^1$ | $R^2$ | $R^3$ | Physikal. Daten |
|---|---|---|---|---|---|
| 76 | O | $NHC_3H_7$-i | $OCH_3$ | 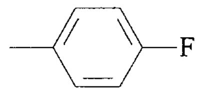 | $n_D^{20}$ = 1,5552 |
| 77 | O | $N(CH_3)_2$ | $N(CH_3)_2$ | 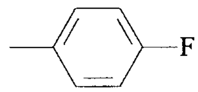 | |
| 78 | O | $NHC_2H_5$ | $-OC_2H_5$ | 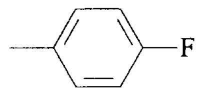 | |
| 79 | O | $NHC_3H_7$-i | $-OC_2H_5$ | 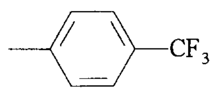 | |
| 80 | S | $NHC_3H_7$-i | $-OC_2H_5$ | 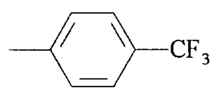 | |
| 81 | O | $NHC_3H_7$-i | $OCH_3$ | 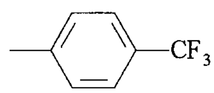 | $n_D^{20}$ = 1,5227 |
| 82 | O | $N(CH_3)_2$ | $N(CH_3)_2$ | 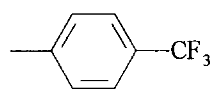 | |
| 83 | O | $NHC_2H_5$ | $-OC_2H_5$ | 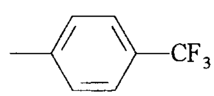 | |
| 84 | O | NHCH | $-OC_2H_5$ | 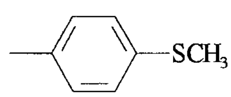 | |
| 85 | S | $NHC_3H_7$-i | $-OC_2H_5$ | 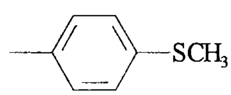 | |

**Tabelle 2** - Fortsetzung

| Bsp.-Nr. | Q | $R^1$ | $R^2$ | $R^3$ | Physikal. Daten |
|---|---|---|---|---|---|
| 86 | O | $NHC_3H_7$-i | $OCH_3$ | 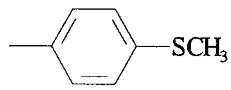 | |
| 87 | O | $N(CH_3)_2$ | $N(CH_3)_2$ | 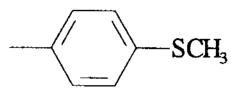 | |
| 88 | O | $NHC_2H_5$ | $-OC_2H_5$ | 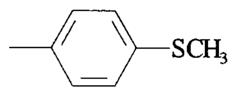 | |
| 89 | O | $NHC_3H_7$-i | $-OC_2H_5$ | 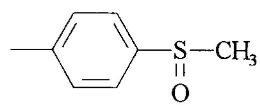 | |
| 90 | S | $NHC_3H_7$-i | $-OC_2H_5$ | 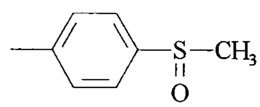 | |
| 91 | O | $NHC_3H_7$-i | $OCH_3$ | 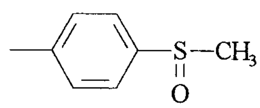 | |
| 92 | O | $N(CH_3)_2$ | $N(CH_3)_2$ | 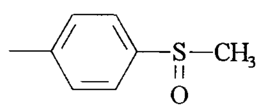 | |
| 93 | O | $NHC_2H_5$ | $-OC_2H_5$ | 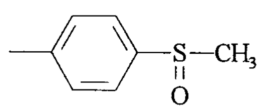 | |
| 94 | O | $NHC_3H_7$-i | $-OC_2H_5$ | 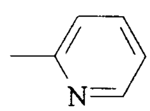 | |

**Tabelle 2** - Fortsetzung

| Bsp.-Nr. | Q | $R^1$ | $R^2$ | $R^3$ | Physikal. Daten |
|---|---|---|---|---|---|
| 95 | S | $NHC_3H_7$-i | $-OC_2H_5$ | 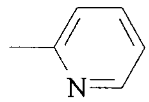 | |
| 96 | O | $NHC_3H_7$-i | $OCH_3$ | 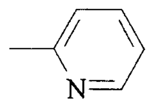 | |
| 97 | O | $N(CH_3)_2$ | $N(CH_3)_2$ | 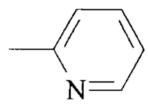 | |
| 98 | O | $NHC_2H_5$ | $-OC_2H_5$ | 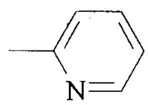 | |
| 99 | O | $NHC_3H_7$-i | $-OC_2H_5$ | 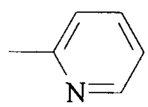 | |
| 100 | S | $NHC_3H_7$-i | $-OC_2H_5$ | 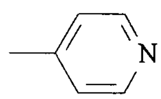 | |
| 101 | O | $NHC_3H_7$-i | $OCH_3$ | 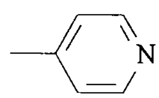 | |
| 102 | O | $N(CH_3)_2$ | $N(CH_3)_2$ | 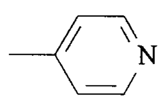 | |
| 103 | O | $NHC_2H_5$ | $-OC_2H_5$ | 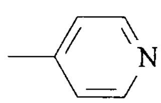 | |

**Tabelle 2** - Fortsetzung

| Bsp.-Nr. | Q | $R^1$ | $R^2$ | $R^3$ | Physikal. Daten |
|---|---|---|---|---|---|
| 104 | O | $NHC_3H_7$-i | $-OC_2H_5$ | 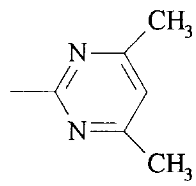 | |
| 105 | S | $NHC_3H_7$-i | $-OC_2H_5$ | 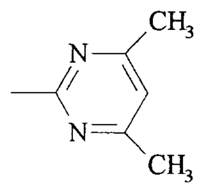 | |
| 106 | O | $NHC_3H_7$-i | $OCH_3$ | 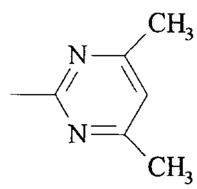 | |
| 107 | O | $N(CH_3)_2$ | $N(CH_3)_2$ | 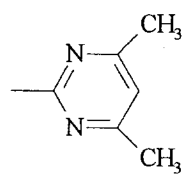 | |
| 108 | O | $NHC_2H_5$ | $-OC_2H_5$ | 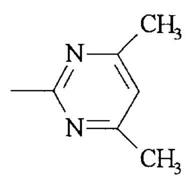 | |
| 109 | O | $N(CH_3)_2$ | $-OC_2H_5$ | 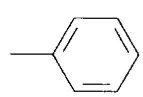 | $n_D^{20} = 1,5970$ |
| 110 | O | $NHCH_3$ | $-OC_2H_5$ | 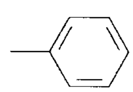 | $n_D^{20} = 1,5804$ |
| 111 | O | $NHC_3H_7$-i | $-OC_2H_5$ | 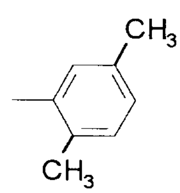 | $n_D^{20} = 1,5509$ |

<u>Anwendungsbeispiele:</u>

<u>Beispiel A</u>

Phaedon-Larven-Test

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit werden die Pflanzen mit Meerrettichblattkäfer-Larven (Phaedon cochleariae) besetzt. Nach jeweils 3 Tagen wird die Abtötung in % bestimmt. Dabei bedeutet 100 %, daß alle Käfer-Larven abgetötet wurden; 0 % bedeutet, daß keine Käfer-Larven abgetötet wurden.

Bei diesem Test zeigte z.B. die Verbindung gemäß Herstellungsbeispiel (1) bei einer Wirkstoffkonzentration von 0,01% nach 7 Tagen einen Abtötungsgrad von 100%.

Beispiel B

Plutella-Test

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Bei diesem Test zeigte z.B. die Verbindung gemäß Herstellungsbeispiel (1) bei einer Wirkstoffkonzentration von 0,1% nach 7 Tagen einen Abtötungsgrad von 100%.

Beispiel C

Nephotettix-Test

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Reiskeimlinge (Oryza sativa) werden durch Tauchen in die Wirkstoffzubereitung der gewünschten Konzentration behandelt und mit Larven der Grünen Reiszikade (Nephotettix cincticeps) besetzt, solange die Keimlinge noch feucht sind.

Nach der gewünschten Zeit wird die Abtötung in % bestimmt. Dabei bedeutet 100 %, daß alle Zikaden abgetötet wurden; 0 % bedeutet, daß keine Zikaden abgetötet wurden.

Bei diesem Test zeigte z.B. die Verbindung gemäß Herstellungsbeispiel (1) bei einer Wirkstoffkonzentration von 0,1% nach 6 Tagen einen Abtötungsgrad von 100%.

Beispiel D

Meloidogyne incognita-Test

Lösungsmittel: 4 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat

mit Wasser auf die gewünschte Konzentration.

Die Wirkstoffzubereitung wird innig mit dem Boden vermischt, der mit den Testnematoden stark verseucht ist. Dabei spielt die Konzentration des Wirkstoffes in der Zubereitung praktisch keine Rolle, entscheidend ist allein die Wirkstoffmenge pro Volumeneinheit Boden, welche in ppm (= mg/l) angegeben wird. Man füllt den behandelten Boden in Töpfe, sät Salat ein und hält die Töpfe bei einer Gewächshaustemperatur von 25 °C.

Nach vier Wochen werden die Salatwurzeln auf Nematodenbefall (Wurzelgallen) untersucht und der Wirkungsgrad des Wirkstoffes in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

Bei diesem Test zeigte z.B. die Verbindung gemäß Herstellungsbeispiel (1) bei einer Wirkstoftkonzentration von 20 ppm einen Abtötungsgrad von 100%.

Beispiel E

Fliegentest

| | |
|---|---|
| Testtiere: | Musca domestica, Stamm WHO(N) |
| Lösungsmittel: | 35 Gewichtsteile Ethylenglykolmonomethylether |
| | 35 Gewichtsteile Nonylphenolpolyglykolether |

Zwecks Herstellung einer geeigneten Formulierung vermischt man drei Gewichtsteile Wirkstoff mit sieben Teilen des oben angegebenen Lösungsmittel-Emulgator-Gemisches und verdünnt das so erhaltene Emulsionskonzentrat mit Wasser auf die jeweils gewünschte Konzentration.

2 ml dieser Wirkstoffzubereitung werden auf Filterpapierscheiben (Ø 9,5 cm) pipettiert, die sich in Petrischalen entsprechender Größe befinden. Nach Trocknung der Filterscheiben werden 25 Testinsekten in die Petrischalen überführt und abgedeckt.

Nach 6 Stunden wird die Wirksamkeit der Wirkstoffzubereitung ermittelt. Die Wirksamkeit drückt man in % aus. Dabei bedeutet 100 %, daß alle Fliegen abgetötet wurden; 0 % bedeutet, daß keine Fliegen abgetötet wurden.

Bei diesem Test ergab beispielsweise die Verbindung aus Beispiel 2, bei einer beispielhaften Konzentration von 1 000 ppm, eine Abtötung von 100 %.

Beispiel F

Blowfly-Larven-Test

| | |
|---|---|
| Testtiere: | Lucilia cuprina-Larven |
| Lösungsmittel: | 35 Gewichtsteile Ethylenglykolmonomethylether |
| | 35 Gewichtsteile Nonylphenolpolyglykolether |

Zur Herstellung einer zweckmäßigen Wirkstoffzubereitung vermischt man drei Gewichtsteile Wirkstoff mit sieben Gewichtsteilen des oben angegebenen Gemisches und verdünnt das so erhaltene Emulsionkonzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird die Wirksamkeit der Wirkstoffzubereitung ermittelt. Dabei bedeutet 100 %, daß alle Blowfly-Larven abgetötet wurden; 0 % bedeutet, daß keine Blowfly-Larven abgetötet wurden.

Bei diesem Test zeigten z.B. die Verbindungen der Beispiele 1, 2, 5, 6, 7, 42, 45 und 54 bei einer beispielhaften Konzentration von 1 000 ppm eine Abtötung von 100 %.

Beispiel G

Schabentest

| | |
|---|---|
| Testtiere: | Blattella germanica oder Periplaneta americana |
| Lösungsmittel: | 35 Gewichtsteile Ethylenglykolmonomethylether |
| | 35 Gewichtsteile Nonylphenolpolyglykolether |

Zwecks Herstellung einer geeigneten Formulierung vermischt man drei Gewichtsteile Wirkstoff mit sieben Teilen des oben angegeben Lösungsmittel-Emulgator-Gemischesund verdünnt das so erhaltene Emulsionskonzentrat mit wasser auf die jeweils gewünschte Konzentration.

2 ml dieser Wirkstoffzubereitung werden auf Filterpapierscheiben (∅ 9,5 cm) pipettiert, die sich in Petrischalen entsprechender Größe befinden. Nach Trocknung der Filterscheiben werden 5 Testtiere bei B. germanica bzw. P. americana überführt und abgedeckt.

Nach 3 Tagen wird die Wirksamkeit der Wirkstoffzubereitung bestimmt. Die Wirksamkeit drückt man in % aus. Dabei bedeutet 100 %, daß alle Schaben abgetötet wurden; 0 % bedeutet, daß keine Schaben abgetötet wurden.

Bei diesem Test zeigte z.B. die Verbindung aus Beispiel 5, bei einer beispielhaften Wirkstoffkonzentration von 1 000 ppm, eine Abtötung von 100 %.

Beispiel H

Test mit Boophilus microplus resistent/SP-resistenter Parkhurst-Stamm

Lösungsmittel: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnt das so erhaltene Konzentrat mit Wasser auf die gewünschte Konzentration.

10 adulte Boophilus microplus res. werden in die zu testende Wirkstoffzubereitung 1 Minute getaucht. Nach Überführung in Plastikbecher und Aufbewahrung in einem klimatisierten Raum wird der Abtötungsgrad bestimmt.

Dabei bedeutet 100 %, daß alle Zecken abgetötet wurden; 0 % bedeutet, daß keine Zecken abgetötet wurden.

Bei diesem Test zeigten z.B. die Verbindungen der Beispiele 42, 45 und 54 bei einer beispielhaften Konzentration von 1 000 ppm eine Abtötung von über 75 %.

**Patentansprüche**

1. Phosphorylthiomethylsulfoxide der allgemeinen Formel (I)

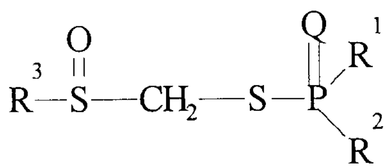

(I)

in welcher
Q für Sauerstoff oder Schwefel steht,
$R^1$ für Alkyl, Alkylthio, Alkylamino oder Dialkylamino steht,
$R^2$ für Alkoxy, Alkylthio, Alkylamino oder Dialkylamino steht und
$R^3$ für gegebenenfalls substituiertes Aryl oder gegebenenfalls substituiertes Heteroaryl steht.

2. Verbindungen gemäß Anspruch 1, in welcher
Q für Sauerstoff oder Schwefel steht,
$R^1$ für $C_1$-$C_6$-Alkyl, $C_1$-$C_6$-Alkylthio, $C_1$-$C_5$-Alkylamino oder Di-($C_1$-$C_5$-alkyl)-amino steht,
$R^2$ für $C_1$-$C_6$-Alkoxy, $C_1$-$C_6$-Alkylthio, $C_1$-$C_5$-Alkylamino oder Di-($C_1$-$C_5$--alkyl)-amino steht, und
$R^3$ für gegebenenfalls substituiertes Phenyl oder Naphthyl oder für gegebenenfalls substituiertes und/oder gegebenenfalls benzanelliertes Heteroaryl steht, welches 1 bis 3 Heteroatome enthält, wobei Phenyl, Naphthyl, Heteroaryl oder der benzanellierte Ring substituiert sein können durch Cyano, Nitro, Halogen, $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl oder $C_1$-$C_4$-Alkoxycarbonyl, $C_1$-$C_4$-Halogenalkyl, $C_1$-$C_4$-Halogenalkoxy, $C_1$-$C_4$-Halogenalkylthio, $C_1$-$C_4$-Halogenalkylsulfinyl und/oder $C_1$-$C_4$-Halogenalkylsulfonyl.

3. Verbindungen gemäß Anspruch 1 in welchen
Q für Sauerstoff oder Schwefel steht,

$R^1$ für $C_1$-$C_4$-Alkyl, $C_1$-$C_4$-Alkylthio, $C_1$-$C_3$-Alkylamino oder Di-($C_1$-$C_3$-alkyl)-amino steht,
$R^2$ für $C_1$-$C_4$-Alkoxy, $C_1$-$C_4$-Alkylthio, $C_1$-$C_3$-Alkylamino oder Di-($C_1$-$C_3$-alkyl)-amino steht, und
$R^3$ für gegebenenfalls substituierte Reste aus der Reihe Phenyl, Naphthyl, Pyridyl, Pyrimidinyl, Pyridazinyl, Pyrazinyl, Furyl, Thienyl, Pyrazolyl, Thiazolyl, Thiadiazolyl, Oxadiazolyl, Oxazolyl, Chinolyl, Isochinolyl, Benzoxazolyl, Benzthiazolyl oder Benzimidazolyl steht, wobei als Substituenten Cyano, Nitro, Fluor, Chlor, Brom, Methyl, Ethyl, Methoxy, Ethoxy, Methylthio, Ethylthio, Methylsulfinyl, Ethylsulfinyl, Methylsulfonyl, Ethylsulfonyl, Methoxycarbonyl, Ethoxycarbonyl, Difluormethyl, Trifluormethyl, Chlordifluormethyl, Difluormethoxy, Trifluormethoxy, Difluormethylthio, Trifluormethylthio, Chlordifluormethylthio, Trifluormethylsulfinyl und/oder Trifluormethylsulfonyl stehen können.

**4.** Verbindungen gemäß Anspruch 1, in welchen
Q für Sauerstoff steht,
$R^1$ für $C_1$-$C_4$-Alkyl, $C_1$-$C_4$-Alkylthio, $C_1$-$C_3$-Alkylamino oder Di-($C_1$-$C_2$-alkyl)-amino steht,
$R^2$ für $C_1$-$C_4$-Alkoxy steht, und
$R^3$ für gegebenenfalls durch Halogen, $C_1$-$C_4$-Alkyl, $C_1$-$C_4$-Alkoxy, $C_1$-$C_4$-Alkylthio, $C_1$-$C_4$-Alkoxycarbonyl, Nitro und/oder Cyano substituierte Reste aus der Reihe Phenyl, Pyridyl und Pyrimidinyl steht.

**5.** Verbindungen gemäß Anspruch 1, in welchen
Q für Sauerstoff steht.

**6.** Verfahren zur Herstellung der Phosphorylthiomethylsulfoxide der allgemeinen Formel (I), dadurch gekennzeichnet, daß man
Phosphorylthiomethylsulfide der allgemeinen Formel (II)

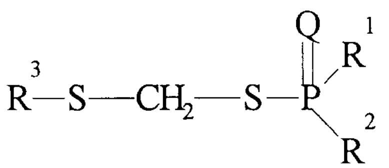

(II)

in welcher
Q, $R^1$, $R^2$ und $R^3$ die oben angegebene Bedeutung haben,
mit Oxidationsmitteln, gegebenenfalls in Gegenwart von Katalysatoren und gegebenenfalls in Gegenwart von Verdünnungsmitteln umsetzt.

**7.** Schädlingsbekämpfungsmittel, gekennzeichnet durch einen Gehalt an mindestens einer Verbindung der Formel (I) gemäß Anspruch 1.

**8.** Verwendung von Verbindungen der Formel (I) gemäß Anspruch 1 zur Bekämpfung von Schädlingen.

**9.** Verfahren zur Bekämfung von Schädlingen, dadurch gekennzeichnet, daß man Verbindungen der Formel (I) gemäß Anspruch 1 auf Schädlinge und/oder ihren Lebensraum einwirken läßt.

**10.** Verfahren zur Herstellung von Schädlingsbekämpfungsmitteln, dadurch gekennzeichnet, daß man Verbindungen der Formel (I) gemäß Anspruch 1 mit Streckmitteln und/oder oberflächenaktiven Mitteln vermischt.

Europäisches Patentamt

# EUROPÄISCHER RECHERCHENBERICHT

Nummer der Anmeldung

EP 93 11 4667

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,Y | FR-A-1 311 303 (STAUFFER CHEMICAL COMPANY)<br>* das ganze Dokument *<br>--- | 1,7-10 | C07F9/24<br>A01N57/06<br>A01N57/08 |
| Y | US-A-2 999 874 (GERHARD SCHRADER)<br>* das ganze Dokument *<br>--- | 1,7-10 | C07F9/40<br>C07F9/165<br>C07F9/44 |
| Y | FR-A-2 223 379 (AMERICAN CYANAMID COMPANY)<br>* das ganze Dokument *<br>--- | 1,7-10 | C07F9/6539<br>C07F9/653<br>C07F9/58 |
| Y | EP-A-0 344 552 (BAYER AG)<br>* das ganze Dokument *<br>----- | 1,7-10 | C07F9/6512 |

RECHERCHIERTE SACHGEBIETE (Int. Cl.5 )

C07F
A01N

Der vorliegende Recherchenbericht wurde für alle Patentansprüche erstellt

| Recherchenort | Abschlußdatum der Recherche | Prüfer |
|---|---|---|
| DEN HAAG | 20 OKTOBER 1993 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument